# EUROPEAN PATENT SPECIFICATION

(11) **EP 1 448 612 B1**
(45) Date of publication and mention of the grant of the patent: **31.12.2008**
(21) Application number: 02791667.5
(22) Date of filing: 06.11.2002
(51) Int. Cl.: C08F 2/44, C08K 5/03, C08K 5/00

(54) **VINYLAROMATIC POLYMERS WITH IMPROVED FLAME RESISTANCE**
VINYLAROMATISCHE POLYMERE MIT VERBESSERTER FLAMMFESTIGKEIT
POLYMERES VINYLAROMATIQUES PRESENTANT UNE RESISTANCE ACCRUE A L'INFLAMMATION

(30) Priority: 30.11.2001 IT MI20012515
(43) Date of publication of application: 25.08.2004
(73) Proprietor: Polimeri Europa S.p.A., 20097 San Donato Milanese (MI) (IT)
(72) Inventor: ODUEYUNGBO, Richard, I-46100 Mantova (IT); GHIDONI, Dario, I-46023 Gonzaga-Mantova (IT)
(74) Representative: De Gregori, Antonella
(86) International application number: PCT/EP2002/012474
(87) International publication number: WO 2003/046016

(56) References cited:
- EP-A- 0 032 993
- US-A- 3 058 926

## Description

The present invention relates to vinylaromatic polymers with improved flame resistance.

More specifically, the present invention relates to self-extinguishing or flame-resistant vinylaromatic polymers, optionally expandable, capable of complying, for example, with the DIN 4102 regulation for expandable materials.

Vinylaromatic polymers, and among these, polystyrene in particular, are products which have been known and used for a long time for the preparation of compact and/or expanded articles which can be used in various applicative fields, among which the most important are those relating to household appliances, transport, the building industry, office machines, etc. A particularly interesting field is thermal insulation where vinylaromatic polymers are essentially used in expanded form.

These expanded products are obtained by swelling in a pre-expander beads of expandable polymer previously impregnated with an expanding agent and molding the swollen particles inside a closed mould by means of the contemporaneous effect of pressure and temperature. The swelling of the particles is generally effected with vapour, or another gas, maintained at a temperature slightly higher than the glass transition temperature (Tg) of the polymer.

A particular applicative field of expanded polystyrene is that of thermal insulation in the building industry where it is generally used in the form of flat plates. For these applications, expanded polystyrene must also have, in addition to a low thermal conductivity, a valid flame resistance which is generally obtained with particular additives.

U.S. patent 4,293,656 describes a polystyrene with flame resistant properties obtained by adding to the polymer, a synergic mixture of two halogenated components, one consisting of a chloro- and/or bromo-substituted hydrocarbon, the other of a diallylether of tetrabromobisphenol A such as 2,2-bis(4-allyloxy-3,5-dibromophenyl)-propane.

The Applicant has now found that the addition of an organic compound, capable of generating free radicals at a temperature higher than the polymerization temperature of polystyrene, to the synergic mixture of the known art, further improves the flame-resistance properties of the polymer.

An object of the present invention therefore relates to vinylaromatic polymers, optionally expandable, with improved flame resistance which comprise:
a) a matrix obtained by polymerizing 50-100% by weight of one or more vinylaromatic monomers and 0-50% by weight of a copolymerizable monomer;
b) 0-10% by weight, calculated with respect to the polymer (a), of an expanding agent embedded in the polymeric matrix;
c) 0.05-5% by weight, calculated with respect to the polymer (a), of a synergic mixture of additives for flame resistance comprising a chloro- and/or bromo-substituted hydrocarbon, 2,2-bis(4-allyloxy-3,5-dibromophenyl)-propane and an organic compound capable of generating free radicals at a temperature higher than 130°C.

The term "vinylaromatic monomer", as used in the present description and claims, essentially refers to a product which corresponds to the following general formula: 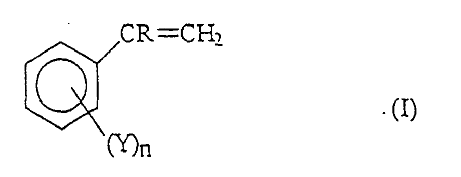 wherein R is a hydrogen or a methyl group, n is zero or an integer ranging from 1 to 5 and Y is a halogen, such as chlorine or bromine, or an alkyl or alkoxyl radical having from 1 to 4 carbon atoms.

Examples of vinylaromatic monomers having the general formula defined above are: styrene, α-methylstyrene, methylstyrene, ethylstyrene, butylstyrene, dimethylstyrene, mono-, di-, tri-, tetra- and penta-chlorostyrene, bromostyrene, methoxy-styrene, acetoxy-styrene, etc. Preferred vinylaromatic monomers are styrene and α-methylstyrene.

The vinylaromatic monomers having general formula (I) can be used alone or in a mixture of up to 50% by weight with other copolymerizable monomers. Examples of these monomers are (meth)acrylic acid, C₁-C₄ alkyl esters of (meth) acrylic acid, such as methyl acrylate, methylmethacrylate, ethyl acrylate, ethylmethacrylate, isopropyl acrylate, butyl acrylate, amides and nitriles of (meth)acrylic acid such as acrylamide, methacrylamide, acrylonitrile, methacrylonitrile, butadiene, ethylene, divinylbenzene, maleic anhydride, etc. Preferred copolymerizable monomers are acrylonitrile and methylmethacrylate.

Any expanding agent capable of being englobed in the vinylaromatic polymeric matrix, can be used in a combination with the vinylaromatic polymers object of the present invention. Typical examples are aliphatic hydrocarbons, freon, carbon dioxide, water, etc.

The synergic mixture of flame-resistance additives substantially comprises three additives. The first consists of a chloro- and/or bromo-substituted hydrocarbon, selected from linear, branched or cyclic paraffins containing from 5 to 20 carbon atoms and (alkyl)aromatic hydrocarbons containing from 6 to 20 carbon atoms and, optionally, one or more heteroatoms such as oxygen, nitrogen and sulfur. The halogen content in these additives is equal to at least 50% by weight, preferably from 55 to 85%.

Examples of chloro- and/or bromo-substituted hydrocarbons are 1,2,5,6,9,10-hexabromocyclododecane, tetrabromo, dibenzalacetone, pentabromophenylallyl ether, pentabromomonochlorocyclohexane, 1,1,2,3,4,4-hexabromobutene-2, 2,5-bis(tribromomethyl)-1,3,4-thiadiazole, 2,4,6-tris(tribromomethyl)-1,3,5,-triazine, tetrabromoethane, bromotrichloromethane, 1,2,5,6-tetrabromohexane, hexabromobenzene, pentabromophenol, pentabromo-diphenylether, octabromocyclohexadecane, α-bromonaphthalene.

In the synergic mixture of flame-resistance additives the bromo- and/or chloro-substituted hydrocarbon is present in a quantity equal to or higher than 10% by weight, preferably from 10 to 70%, even more preferably from 15 to 50%.

The additive 2,2-bis(4-allyloxy-3,5-dibromophenyl)-propane is present in the synergic mixture in a quantity lower than 70% by weight, preferably from 25 to 70%, even more preferably from 30 to 65%.

Any organic compound capable of generating free radicals at a temperature higher than 130°C can be used as third component of the synergic mixture of flame-resistance additives, object of the present invention. For example, these additives can be selected from peroxides, percarbonates, azo derivatives or from carbon-carbon initiators.

Dicumyl peroxide, 2,3-dimethyl-2,3-diphenyl butane and diphenyl butane, however, are preferred.

The third additive of the synergic mixture is present in a quantity equal to or lower than 30% by weight, preferably from 5 to 25%, even more preferably from 7 to 20%.

The expanding agent (b), if present, and the synergic mixture (c) are preferably added to the vinylaromatic polymer during the polymerization phase. At the end of the addition of the mixture, a polymer is obtained which, if expanding agents are added, can be transformed to produce expanded articles having a density ranging from 5 to 50 g/l, preferably from 10 to 25 g/l, with an excellent thermal insulation capacity. These materials, moreover, have a flame-resistance property which passes the DIN 4102 test.

Conventional additives generally used with traditional materials, such as pigments, stabilizing agents, mineral fillers of athermane materials, such as graphite or carbon black, or refracting and/or reflective materials such as titanium dioxide, antistatic agents, detaching agents, etc., can be added to the vinylaromatic polymers, optionally expandable, object of the present invention.

A further object of the present invention relates to the process for the preparation of vinylaromatic polymers, optionally expandable, with improved flame-resistance.

In particular, a further object of the present invention relates to a process for preparing vinylaromatic polymers, optionally expandable, which comprises polymerizing in an aqueous suspension one or more vinylaromatic monomers, optionally together with at least one polymerizable comonomer in a quantity of up to 50% by weight, in the presence of a synergic mixture of flame-resistance additives comprising a chloro- and/or bromo-substituted hydrocarbon, 2,2-bis(4-allyloxy-3,5-dibromophenyl)-propane and an organic compound capable of generating free radicals at a temperature higher than 130°C, and from 0 to 10% by weight of an expanding agent added before, during or after the end of the polymerization.

At the end of the polymerization, substantially spherical polymer beads are obtained, with an average diameter ranging from 0.2 to 2 mm, inside which the synergic mixture is homogeneously dispersed.

During the polymerization in suspension, polymerization additives, typically used for producing vinylaromatic polymers, are adopted, such as polymerization catalysts, stabilizing agents of the suspension, chain transfer agents, expanding aids, nucleating agents, plasticizers, mineral fillers, etc. In particular, in the case of expandable polymers, it is preferable to add mineral fillers of athermane materials, such as graphite, or refracting materials, such as titanium dioxide, during the polymerization, in a quantity ranging from 0.05 to 25% by weight, calculated with respect to the resulting polymer.

The expanding agents, if present, are preferably added during the polymerization phase and are selected from aliphatic or cycloaliphatic hydrocarbons containing from 3 to 6 carbon atoms such as n-pentane, isopentane, cyclopentane or their mixtures; the halogenated derivatives of aliphatic hydrocarbons containing from 1 to 3 carbon atoms such as, for example, dichlorodifluoromethane, 1,2,2-trifluoroethane, 1,1,2-trifluoroethane; carbon dioxide and water.

To improve the stability of the suspension, it is possible to use a solution of vinylaromatic polymer in the monomer, or mixture of monomers, in which the concentration of polymer ranges from 1 to 30% by weight, preferably from 5 to 20%. The solution can be obtained either by diluting a preformed polymer (for example fresh polymer or the waste products of previous polymerizations and/or expansions) in the monomer or by pre-polymerizing the monomer, or mixture of monomers, in mass, in order to obtain the above concentrations, and then continuing the polymerization in aqueous suspension in the presence of the remaining additives.

Another object of the present invention relates to a process for preparing in mass and in continuous, vinylaromatic polymers, optionally expandable, which comprises the following steps in series:
i. feeding a vinylaromatic polymer, as described above, to an extruder, together with the synergic mixture of flame-resistance additives;
ii. heating the vinylaromatic polymer to a temperature higher than the relative melting point;
iii. injecting possible additives such as expanding agents, into the molten polymer before extrusion through a die; and
iv. forming beads, optionally expandable, through a die, in a substantially spherical form with an average diameter ranging from 0.2 to 2 mm.

A detailed method for preparing vinylaromatic polymers in mass and in continuous is provided in European patent EP 126,459.

In the case of expandable vinylaromatic polymers, whether they be prepared in suspension or in mass and in continuous, at the end of the polymerization, the beads produced are subjected to pre-treatment generally applied to traditional materials and which essentially consists in:
1. coating the beads with a liquid antistatic agent such as amines, tertiary ethoxylated alkylamines, ethylene oxide-propylene oxide copolymers, etc. The purpose of this agent is to facilitate both the adhesion of the coating and also the screening of the beads prepared in suspension;
2. applying the coating to the above beads, said coating essentially consisting of a mixture of mono-, di- and tri-esters of glycerin (or other alcohols) with fatty acids and of metallic stearates such as zinc stearate.

Some illustrative but non-limiting examples are provided for a better understanding of the present invention and for its embodiment.

### EXAMPLES 1-7

A mixture of 150 parts by weight of water, 0.1 parts of sodium pyrophosphate, 100 parts of styrene, 0.15 parts of benzoyl peroxide, 0.25 parts of ter-butyl perbenzoate and a synergic mixture of flame-resistance additives comprising hexabromine-cyclododecane (EBCD) and 2,2-bis(4-allyloxy-3,5-dibromophenyl)-propane (BE) (0.53% of total bromine) and 0.2 parts of dicumyl peroxide (DCP) in the proportions indicated in the following table, are charged into a closed, stirred container. The mixture is heated to 90°C under stirring.

After about 2 hours at 90°C, 4 parts of a solution at 10% of polyvinylpyrrolidone are added. The mixture is heated, under stirring, for a further 2 hours to 100°C, 7 parts of a 70/30 mixture of n-pentane and i-pentane are added and the mixture heated for a further 4 hours to 125°C.

The beads of expandable polymer thus produced are subsequently recovered, washed with deionized water, dried in a stream of warm air, 0.02% of ethoxylated amine are added, and screened separating the fraction with a diameter ranging from 1 to 1.5 mm.

0.2% of glycerylmonosterate and 0.05% of zinc stearate are then added to the fraction.

The beads are expanded with vapour to a temperature of 100°C and subsequently moulded to give simple end-products with a density of about 16-17 g/l. Test samples according to the regulation DIN 4102 are taken from the end-products. These test samples are then conditioned in an oven up to the maximum expanding content of 0.5%. The results of the flame test are indicated in the table.

**TABLE**

| TEST | EBCD % | BE % | DCP % | **H**_{flame} (1) cm | **t**_{average} (2) sec | Notes |
|---|---|---|---|---|---|---|
| 1 | 0.67 | - | 0.2 | 7.4 | 7.0 | |
| 2 | 0.64 | 0.2 | - | 8.0 | 4.9 | |
| 3 | 0.64 | 0.2 | 0.2 | 3.0 | 2.8 | |
| 4 | 0.17 | 0.74 | 0.2 | 3.4 | 4.7 | |
| 5 | 0.34 | 0.49 | 0.2 | 3.6 | 4.4 | |
| 6 | 0.51 | 0.25 | 0.2 | 5.6 | 5.5 | |
| 7 | 0.32 | 0.10 | 0.2 | 9.0 | 8.5 | (3) |

| | | | | | | |
|---|---|---|---|---|---|---|
| (1) flame height (2) average combustion time (3) minimum quantity for passing the DIN 4102 test | | | | | | |

### EXAMPLE 8

The same procedure is substantially adopted as in the previous examples except that the dicumyl peroxide of Example 5 is substituted with 2,3-dimethyl-2,3-diphenyl butane (Perkadox 30 of AKZO).

When subjected to the flame test, the sample gave the following results:
**H**_{flame} = 3.3 cm;
**t**_{average} = 3.7 sec.

## Claims

1. Vinylaromatic polymers, optionally expandable, with improved flame resistance, which comprise:
a) a matrix obtained by polymerizing 50-100% by weight of one or more vinylaromatic monomers and 0-50% by weight of a copolymerizable monomer;
b) 0-10% by weight, calculated with respect to the polymer (a), of an expanding agent embedded in the polymeric matrix;
c) 0.05-5% by weight, calculated with respect to the polymer (a), of a synergic mixture of additives for flame resistance comprising a chloro- and/or bromo-substituted hydrocarbon, 2,2-bis(4-allyloxy-3,5-dibromophenyl)propane and an organic compound capable of generating free radicals at a temperature higher than 130°C.

2. The polymers according to claim 1, wherein the vinylaromatic monomer is selected from those corresponding to the following general formula: 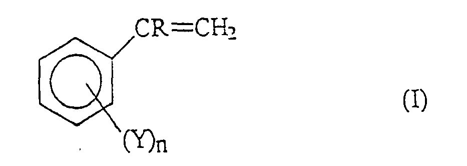 wherein R is a hydrogen or methyl group, n is zero or an integer ranging from 1 to 5 and Y is a halogen, such as chlorine or bromine, or an alkyl or alkoxyl radical having from 1 to 4 carbon atoms.

3. The polymers according to claim 1 or 2, wherein the vinylaromatic monomers having general formula (I) are styrene and α-methylstyrene.

4. The polymers according to any of the previous claims, wherein the vinylaromatic monomers having general formula (I) are used in a mixture, of up to 50% by weight, with other copolymerizable monomers selected from (meth) acrylic acid, C₁-C₄ alkyl esters of (meth)acrylic acid, amides and nitriles of (meth)acrylic acid, butadiene, ethylene, divinylbenzene, maleic anhydride.

5. The polymers according to claim 4, wherein the copolymerizable monomers are acrylonitrile and methylmethacrylate.

6. The polymers according to any of the previous claims, wherein the chloro- and/or bromo-substituted hydrocarbon of the synergic mixture of flame-resistance additives is selected from linear, branched or cyclic paraffins containing from 1 to 20 carbon atoms and (alkyl)aromatic hydrocarbons containing from 6 to 20 carbon atoms and, optionally, one or more heteroatoms such as oxygen, nitrogen and sulfur.

7. The polymers according to any of the previous claims, wherein the halogen content in the chloro- and/or bromo-substituted hydrocarbon is equal to at least 50% by weight, preferably from 55 to 85%.

8. The polymers according to claim 6 or 7, wherein the chloro- and/or bromo-substituted hydrocarbons are selected from 1,2,5,6,9,10-hexabromocyclododecane, tetrabromo dibenzalacetone, pentabromophenylallyl ether, pentabromomonochlorocyclohexane, 1,1,2,3,4,4-hexabromobutene-2,2,5-bis(tribromomethyl)-1,3,4-thiadiazole, 2,4,6-tris(tribromomethyl)-1,3,5-triazine, tetrabromoethane, bromotrichloromethane, 1,2,5,6-tetrabromohexane, hexabromobenzene, pentabromophenol, pentabromodiphenylether, octabromocyclohexadecane, α-bromonaphthalene.

9. The polymers according to any of the previous claims, wherein in the synergic mixture of flame-resistance additives, the bromo- and/or chloro-substituted hydrocarbon is present in a quantity equal to or higher than 10% by weight, preferably from 10 to 70%.

10. The polymers according to any of the previous claims, wherein the additive 2,2-bis(4-allyloxy-3,5-dibromophenyl)-propane is present in the synergic mixture in a quantity equal to or lower than 70% by weight, preferably from 25 to 70%.

11. The polymers according to any of the previous claims, wherein the organic compound capable of generating free radicals at a temperature higher than 130°C is selected from peroxides, percarbonates, azo derivatives or from carbon-carbon initiators.

12. The polymers according to claim 11, wherein the organic compound is selected from dicumyl peroxide, 2,3-dimethyl-2,3-diphenyl butane and diphenyl butane.

13. The polymers according to any of the previous claims, wherein the organic compound capable of generating free radicals at a temperature higher than 130°C is present in the synergic mixture in a quantity equal to or lower than 30% by weight, preferably from 5 to 25%.

14. Expanded articles obtained with the expandable vinylaromatic polymers according to any of the previous claims, having a density ranging from 5 to 50 g/l, with a flame-resistance property which is such as to enable it to pass the DIN 4102 test and a thermal conductivity ranging from 25 to 50 mW/mK.

15. A process for the preparation of polymers, optionally expandable, with improved flame resistance which comprises polymerizing in an aqueous suspension one or more vinylaromatic monomers, optionally together with at least one polymerizable comonomer in a quantity of up to 50% by weight, in the presence of a synergic mixture of flame-resistance additives comprising a chloro- and/or bromo-substituted hydrocarbon, 2,2-bis(4-allyloxy-3,5-dibromophenyl)-propane and an organic compound capable of generating free radicals at a temperature higher than 130°C, and 0-10% by weight of an expanding agent added before, during or after the end of the polymerization.

16. A process for preparing in mass and in continuous, vinylaromatic polymers, optionally expandable, which comprises the following steps in series:
i. feeding a vinylaromatic polymer, as described above, to an extruder, together with the synergic mixture of flame-resistance additives;
ii. heating the vinylaromatic polymer to a temperature higher than the relative melting point;
iii. injecting possible additives such as expanding agents, into the molten polymer before extrusion through a die; and
iv. forming beads, optionally expandable, through a die, in a substantially spherical form with an average diameter ranging from 0.2 to 2 mm.

17. The process according to claim 15 or 16, wherein at the end of the polymerization, substantially spherical beads of polymer are obtained, with an average diameter ranging from 0.2 to 2 mm, inside which the synergic mixture is homogeneously dispersed.

18. The process according to claim 15, 16 or 17, wherein during the polymerization, polymerization additives are used, selected from polymerization catalysts, stabilizing agents of the suspension, chain transfer agents, expanding aids, nucleating agents, plasticizers, mineral fillers.

19. The process according to claim 18, wherein the mineral filler is selected from athermane or refracting materials in a quantity ranging from 0.05 to 25% by weight calculated with respect to the resulting polymer.

20. The process according to claim 15, wherein the expanding agents are added during the polymerization phase.

21. The process according to claim 15, wherein the polymerization takes place using a solution of vinylaromatic polymer in the monomer, or mixture of monomers, wherein the concentration of polymer ranges from 1 to 30% by weight.

22. The process according to any of the previous claims from 15 to 21, wherein the expandable beads are subjected to pretreatment applied to conventional expandable beads and which essentially consists in:
1. coating the beads with a liquid antistatic agent such as amines, tertiary ethoxylated alkylamines, ethylene oxide-propylene oxide copolymers;
2. applying the coating to the above beads, said coating essentially consisting of a mixture of mono-, di- and tri-esters of glycerin with fatty acids and of metallic stearates such as zinc stearate.

## Patentansprüche

1. Vinylaromatische Polymere mit verbesserter Flammbeständigkeit, die gegebenenfalls schäumbar sind, die umfassen:
a) eine Matrix, die durch Polymerisieren von 50-100 Gew.-% eines oder mehrerer vinylaromatischer Monomere und 0-50 Gew.-% eines copolymerisierbaren Monomers erhalten wird;
b) 0-10 Gew.-%, berechnet unter Bezug auf Polymer (a), eines Treibmittels, das in die Polymermatrix eingebettet ist;
c) 0,05-5 Gew.-%, berechnet unter Bezug auf Polymer (a), eines synergetischen Gemisches von Flammbeständigkeitszusätzen, das einen Chlor- und/oder Brom-substituierten Kohlenwasserstoff, 2,2-Bis(4-allyloxy-3,5-dibromphenyl)-propan und eine organische Verbindung, die in der Lage ist, freie Radikale bei einer Temperatur oberhalb von 130°C zu erzeugen, umfasst.

2. Polymere gemäß Anspruch 1, wobei das vinylaromatische Monomer ausgewählt ist aus jenen, die der folgenden allgemeinen Formel entsprechen: 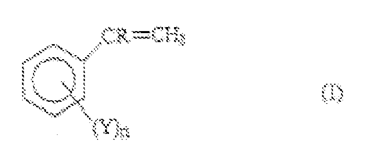 wobei R ein Wasserstoff oder eine Methylgruppe ist, n Null oder eine ganze Zahl im Bereich von 1 bis 5 ist und Y ein Halogen, wie etwa Chlor oder Brom, oder ein Alkyl-oder Alkoxylrest, das 1 bis 4 Kohlenstoffatome aufweist, ist.

3. Polymere gemäß Anspruch 1 oder 2, wobei die vinylaromatischen Monomere der allgemeinen Formel (I) Styrol und α-Methylstyrol sind.

4. Polymere gemäß einem der vorangehenden Ansprüche, wobei die vinylaromatischen Monomere der allgemeinen Formel (I) in einem Gemisch von bis zu 50 Gew.-% mit anderen copolymerisierbaren Monomeren verwendet werden, die ausgewählt sind aus (Meth)acrylsäure, C₁-C₄-Alkylester von (Meth)acrylsäure, Amiden und Nitrilen von (Meth)acrylsäure, Butadien, Ethylen, Divinylbenzol, Maleinsäureanhydrid.

5. Polymere gemäß Anspruch 4, wobei die copolymerisierbaren Monomere Acrylnitril und Methylmethacrylat sind.

6. Polymere gemäß einem der vorangehenden Ansprüche, wobei der Chlor- und/oder Brom-substituierte Kohlenwasserstoff des synergetischen Gemisches von Flammbeständigkeitszusätzen ausgewählt ist aus linearen, verzweigten oder zyklischen Paraffinen, die 1 bis 20 Kohlenstoffatome enthalten und (alkyl)aromatischen Kohlenwasserstoffen, die 6 bis 20 Kohlenstoffatome und gegebenenfalls ein oder mehrere Heteroatome, wie etwa Sauerstoff, Stickstoff und Schwefel enthalten.

7. Polymere gemäß einem der vorangehenden Ansprüche, wobei der Halogengehalt im Chlor- und/oder Brom-substituierten Kohlenwasserstoff mindestens 50 Gew.-%, vorzugsweise 55 bis 85% beträgt.

8. Polymere gemäß Anspruch 6 oder 7, wobei die Chlor- und/oder Brom-substituierten Kohlenwasserstoffe ausgewählt sind aus 1,2,5,6,9,10-Hexabromcyclododecan, Tetrabromdibenzalaceton, Pentabromphenylallylether, Pentabrommonochlorcyclohexan, 1,1,2,3,4,4-Hexabrombuten-2, 2,5-Bis(tribrommethyl)-1,3,4-thiadiazol, 2,4,6-Tris(tribrommethyl)-1,3,5-triazin, Tetrabromethan, Bromtrichlormethan, 1,2,5,6-Tetrabromhexan, Hexabrombenzol, Pentabromphenol, Pentabromdiphenylether, Octabromcyclohexadecan, α-Bromnaphthalin.

9. Polymere gemäß einem der vorangehenden Ansprüche, wobei in dem synergetischen Gemisch von Flammbeständigkeitszusätzen der Brom- und/oder Chlorsubstituierte Kohlenwasserstoff in einer Menge vorliegt, die gleich oder mehr als 10 Gew.-%, vorzugsweise von 10 bis 70% beträgt.

10. Polymere gemäß einem der vorangehenden Ansprüche, wobei der Zusatz 2,2-Bis(4-allyloxy-3,5-dibromphenyl)-propan in dem synergetischen Gemisch in einer Menge vorliegt, die gleich oder weniger als 70 Gew.-%, vorzugsweise von 25 bis 70% beträgt.

11. Polymere gemäß einem der vorangehenden Ansprüche, wobei die organische Verbindung, die in der Lage ist, freie Radikale bei einer Temperatur oberhalb von 130°C zu erzeugen, ausgewählt ist aus Peroxiden, Percarbonaten, Azoderivaten oder aus Kohlenstoff-Kohlenstoff-Startern.

12. Polymere gemäß Anspruch 11, wobei die organische Verbindung ausgewählt ist aus Dicumylperoxid, 2,3-Dimethyl-2,3-diphenylbutan und Diphenylbutan.

13. Polymere gemäß einem der vorangehenden Ansprüche, wobei die organische Verbindung, die in der Lage ist, freie Radikale bei einer Temperatur oberhalb von 130°C zu erzeugen, in dem synergetischen Gemisch in einer Menge vorliegt, die gleich oder weniger als 30 Gew.-%, vorzugsweise von 5 bis 25% beträgt.

14. Geschäumte Gegenstände, die mit den schäumbaren, vinylaromatischen Polymeren gemäß einem der vorangehenden Ansprüche erhalten werden und die eine Dichte im Bereich von 5 bis 50 g/l aufweisen, mit einer derartigen Flammbeständigkeit, dass sie ihnen ermöglicht, den DIN 4102-Test zu bestehen, und einer Wärmeleitfähigkeit im Bereich von 25 bis 50 mW/mK.

15. Verfahren zur Herstellung von Polymeren mit verbesserter Flammbeständigkeit, die gegebenenfalls schäumbar sind, umfassend ein Polymerisieren von einem oder mehreren vinylaromatischen Monomeren, gegebenenfalls zusammen mit mindestens einem polymerisierbaren Comonomer in einer Menge von bis zu 50 Gew.-%, in einer wässrigen Suspension in Gegenwart eines synergetischen Gemisches von Flammbeständigkeitszusätzen, das einen Chlor- und/oder Brom-substituierten Kohlenwasserstoff, 2,2-Bis(4-allyloxy-3,5-dibromphenyl)-propan und eine organische Verbindung, die in der Lage ist, freie Radikale bei einer Temperatur oberhalb von 130°C zu erzeugen, umfasst und 0-10 Gew.-% eines Treibmittels, das vor, während oder nach Ende der Polymerisation zugegeben wird.

16. Verfahren zur Herstellung von vinylaromatischen Polymeren, die gegebenenfalls schäumbar sind, in Masse oder kontinuierlich, das die folgenden Schritte der Reihe nach umfasst:
i. Einführen eines vinylaromatischen Polymers, wie oben beschrieben, in einen Extruder, zusammen mit dem synergetischen Gemisch von Flammbeständigkeitszusätzen;
ii. Erwärmen des vinylaromatischen Polymers auf eine Temperatur oberhalb des relativen Schmelzpunkts;
iii. Injizieren möglicher Zusätze, wie etwa Treibmittel in das geschmolzene Polymer vor einer Extrusion durch eine Düse; und
iv. Bilden von gegebenenfalls schäumbaren Perlen von im Wesentlichen kugelförmiger Gestalt mit einem durchschnittlichen Durchmesser im Bereich von 0,2 bis 2 mm durch eine Düse.

17. Verfahren gemäß Anspruch 15 oder 16, wobei am Ende der Polymerisation im Wesentlichen kugelförmige Polymerperlen mit einem durchschnittlichen Durchmesser im Bereich von 0,2 bis 2 mm erhalten werden, in denen das synergetische Gemisch homogen dispergiert ist.

18. Verfahren gemäß Anspruch 15, 16 oder 17, wobei während der Polymerisation Polymerisationszusätze verwendet werden, die ausgewählt sind aus Polymerisationskatalysatoren, Suspensionsstabilisatoren, Kettentransfermitteln, Treibhilfen, Nukleationsmitteln, Weichmachern, mineralischen Füllstoffen.

19. Verfahren gemäß Anspruch 18, wobei der mineralische Füllstoff ausgewählt ist aus athermanen oder lichtbrechenden Materialien in einer Menge im Bereich von 0,05 bis 25 Gew.-%, berechnet unter Bezug auf das erhaltene Polymer.

20. Verfahren gemäß Anspruch 15, wobei die Treibmittel während der Polymerisationsphase zugegeben werden.

21. Verfahren gemäß Anspruch 15, wobei die Polymerisation unter Verwendung einer Lösung von vinylaromatischem Polymer in dem Monomer oder dem Gemisch von Monomeren stattfindet, wobei die Konzentration von Polymer im Bereich von 1 bis 30 Gew.-% liegt.

22. Verfahren gemäß einem der vorangehenden Ansprüche 15 bis 21, wobei die schäumbaren Perlen einer Vorbehandlung unterzogen werden, wie sie herkömmliche schäumbare Perlen erfahren und die im Wesentlichen besteht aus:
1. Beschichten der Perlen mit einem flüssigen Antistatikum, wie etwa Aminen, tertiären ethoxylierten Alkylaminen, Ethylenoxid-Propylenoxid-Copolymeren;
2. Auftragen der Beschichtung auf die obigen Perlen, wobei diese Beschichtung im Wesentlichen aus einem Gemisch von Mono-,Di- und Triestern von Glycerin mit Fettsäuren und von Metallstearaten, wie etwa Zinkstearat, besteht.

## Revendications

1. Polymères vinylaromatiques, éventuellement expansibles, présentant une résistance à la flamme améliorée, qui comprennent :
a) une matrice obtenue en polymérisant 50 à 100% en poids d'un ou plusieurs monomères vinylaromatiques et 0% à 50% en poids d'un monomère copolymérisable ;
b) 0% à 10% en poids, calculé par rapport au polymère (a), d'un agent d'expansion incorporé dans la matrice polymère ;
c) 0,05% à 5% en poids, calculé par rapport au polymère (a), d'un mélange synergique d'additifs de résistance à la flamme comprenant un hydrocarbure chloro- et/ou bromo-substitué, du 2,2-bis(4-allyloxy-3,5-dibroméphényl)propane et un composé organique capable de former des radicaux libres à une température supérieure à 130°C.

2. Polymères selon la revendication 1, dans lesquels le monomère vinylaromatique est choisi parmi ceux correspondant à la formule générale suivante : 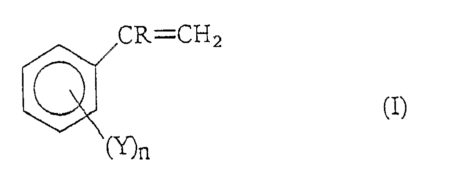 dans laquelle R représente un atome d'hydrogène ou un groupe méthyle, n vaut zéro ou un nombre entier allant de 1 à 5 et Y représente un atome d'halogène tel qu'un atome de chlore ou de brome, ou un radical alkyle ou alcoxyle contenant 1 à 4 atomes de carbone.

3. Polymères selon la revendication 1 ou 2, dans lesquels les monomères vinylaromatiques de formule générale (I) sont le styrène et l'alpha-méthylstyrène.

4. Polymères selon l'une quelconque des revendications précédentes, dans lesquels les monomères vinylaromatiques de formule générale (I) sont utilisés en mélange, jusqu'à 50% en poids, avec d'autres monomères copolymérisables choisis parmi l'acide (méth)acrylique, les esters alkyliques en C₁ à C₄ d'acide (méth)acrylique, les amides et nitriles d'acide (méth)acrylique, le butadiène, l'éthylène, le divinylbenzène, l'anhydride maléique.

5. Polymères selon la revendication 4, dans lesquels les monomères co-polymérisables sont l'acrylonitrile et le méthacrylate de méthyle.

6. Polymères selon l'une quelconque des revendications précédentes, dans lesquels l'hydrocarbure chloro- et/ou bromo-substitué du mélange synergique d'additifs de résistance à la flamme est choisi parmi les paraffines linéaires, ramifiées ou cycliques contenant 1 à 20 atomes de carbone et les hydrocarbures (alkyl)aromatiques contenant 6 à 20 atomes de carbone et, éventuellement, un ou plusieurs hétéroatomes tels que les atomes d'oxygène, d'azote et de soufre.

7. Polymères selon l'une quelconque des revendications précédentes, dans lesquels la teneur en halogène dans l'hydrocarbure chloro- et/ou bromo-substitué est égale à au moins 50% en poids, de préférence de 55% à 85%.

8. Polymères selon la revendication 6 ou 7, dans lesquels les hydrocarbures chloro- et/ou bromo-substitués sont choisis parmi le 1,2,5,6,9,10-hexabromocyclododécane, la tétrabromo-dibenzalacétone, l'éther pentabromophénylallylique, le pentabromomonochlorocyclohexane, le 1,1,2,3,4,4-hexabromobutène-2,2,5-bis(tribromométhyl)-1,3,4-thiadiazole, la 2,4,6-tris(tribromométhyl)-1,3,5-triazine, le tétrabromoéthane, le bromotrichlorométhane, le 1,2,5,6-tétrabromohexane, l'hexabromobenzène, le pentabromophénol, l'éther pentabromodiphénylique, l'octabromocyclohexadécane, l'alpha-bromonaphtalène.

9. Polymères selon l'une quelconque des revendications précédentes, dans lesquels, dans le mélange synergique d'additifs de résistance à la flamme, l'hydrocarbure bromo- et/ou chloro-substitué est présent dans une quantité égale ou supérieure à 10% en poids, de préférence de 10% à 70%.

10. Polymères selon l'une quelconque des revendications précédentes, dans lesquels l'additif 2,2-bis(4-allyloxy-3,5-dibromophényl)-propane est présent dans le mélange synergique dans une quantité égale ou inférieure à 70% en poids, de préférence de 25% à 70%.

11. Polymères selon l'une quelconque des revendications précédentes, dans lesquels le composé organique capable de former des radicaux libres à une température supérieure à 130°C est choisi parmi les peroxydes, les percarbonates, les dérivés azoïques ou parmi les amorceurs carbone-carbone.

12. Polymères selon la revendication 11, dans lesquels le composé organique est choisi parmi le peroxyde de dicumyle, le 2,3-diméthyl-2,3-diphénylbutane et le diphénylbutane.

13. Polymères selon l'une quelconque des revendications précédentes, dans lesquels le composé organique capable de former des radicaux libres à une température supérieure à 130°C est présent dans le mélange synergique dans une quantité égale ou inférieure à 30% en poids, de préférence de 5% à 25%.

14. Articles expansés obtenus avec les polymères vinylaromatiques expansibles selon l'une quelconque des revendications précédentes, ayant une masse volumique allant de 5 à 50 g/L, avec une propriété de résistance à la flamme lui permettant de réussir l'essai DIN 4102 et une conductivité thermique allant de 25 à 50 mW/mK.

15. Procédé de préparation de polymères, éventuellement expansibles, ayant une résistance à la flamme améliorée, qui consiste à polymériser un ou plusieurs monomères vinylaromatiques en suspension aqueuse, éventuellement conjointement avec au moins un comonomère polymérisable dans une quantité allant jusqu'à 50% en poids, en présence d'un mélange synergique d'additifs de résistance à la flamme comprenant un hydrocarbure chloro- et/ou bromo-substitué, du 2,2-bis(4-allyloxy-3,5-dibromophényl)-propane et un composé organique capable de former des radicaux libres à une température supérieure à 130°C, et 0% à 10% en poids d'un agent d'expansion ajouté avant, pendant ou après la fin de la polymérisation.

16. Procédé de préparation, en masse et en continu, de polymères vinylaromatiques, éventuellement expansibles, qui comprend les étapes suivantes successivement :
i. d'introduction d'un polymère vinylaromatique, tel que décrit ci-dessus, dans une extrudeuse conjointement avec le mélange synergique d'additifs de résistance à la flamme ;
ii. de chauffage du polymère vinylaromatique à une température supérieure au point de fusion relatif ;
iii. d'injection des éventuels additifs tels que les agents d'expansion, dans le polymère fondu avant l'extrusion à travers une filière ; et
iv. de formation des billes, éventuellement expansibles, à travers une filière, de forme essentiellement sphérique ayant un diamètre moyen allant de 0,2 à 2 mm.

17. Procédé selon la revendication 15 ou 16, dans lequel, à la fin de la polymérisation, des billes essentiellement sphériques de polymère sont obtenues, avec un diamètre moyen allant de 0,2 à 2 mm, dans lesquelles le mélange synergique est dispersé de manière homogène.

18. Procédé selon la revendication 15, 16 ou 17, dans lequel, pendant la polymérisation, des additifs de polymérisation sont utilisés, lesquels sont choisis parmi les catalyseurs de polymérisation, les agents stabilisants de suspension, les agents de transfert de chaîne, les adjuvants d'expansion, les agents de nucléation, les plastifiants, les charges minérales.

19. Procédé selon la revendication 18, dans lequel la charge minérale est choisie parmi les matériaux athermanes ou réfractaires dans une quantité allant de 0,05% à 25% en poids, calculée par rapport au polymère résultant.

20. Procédé selon la revendication 15, dans lequel les agents d'expansion sont ajoutés pendant la phase de polymérisation.

21. Procédé selon la revendication 15, dans lequel la polymérisation est réalisée en utilisant une solution de polymère vinylaromatique dans le monomère, ou un mélange de monomères, dans laquelle la concentration en polymère va de 1% à 30% en poids.

22. Procédé selon l'une quelconque des revendications 15 à 21, dans lequel les billes expansibles sont soumises à un prétraitement appliqué aux billes expansibles classiques et qui consiste essentiellement à :
1. revêtir les billes d'un agent liquide antistatique tels que des amines, des tert-alkylamines éthoxylées, des copolymères oxyde d'éthylène/oxyde de propylène ;
2. appliquer le revêtement sur les billes ci-dessus, ledit revêtement étant essentiellement composé d'un mélange de mono-, di- et tri-esters de glycérine avec des acides gras et de stéarates métalliques tels que le stéarate de zinc.
